(19) Europäisches Patentamt

European Patent Office

Office européen des brevets

(11) EP 0 978 444 A2

(12) **EUROPÄISCHE PATENTANMELDUNG**

(43) Veröffentlichungstag:
09.02.2000 Patentblatt 2000/06

(51) Int. Cl.⁷: **B62D 65/00**, B62D 41/00, B62D 21/15

(21) Anmeldenummer: 99113611.0

(22) Anmeldetag: 12.07.1999

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **15.04.1999 DE 19917045**
**04.08.1998 DE 19835196**

(71) Anmelder:
**Volkswagen Aktiengesellschaft**
**38436 Wolfsburg (DE)**

(72) Erfinder:
**Scholz, Sven-Peter, Dr.**
**12169 Berlin (DE)**

(54) **Verfahren zur Ermittlung der Verformungen und Spannungen einer aus Teilstrukturen bestehenden Gesamtstruktur**

(57) Verfahren zur Ermittlung der Verformung einer aus Teilstrukturen bestehenden Gesamtstruktur unter Einfluß äußerer Kräfte, wobei die Teilstrukturen zumindest teilweise aus in einem Umformprozeß plastisch verformtem Material bestehen und in einem ersten Verfahrensschritt die Veränderung von lokalen Materialkennwerten und der lokalen Blechdicken der Teilstrukturen in dem jeweiligen Umformprozeß ermittelt werden, und wobei in einem weiteren Verfahrensschritt die Verformung der Gesamtstruktur unter Einfluß äußerer Kräfte ermittelt wird, wobei vor der Ermittlung der Verformung der Gesamtstruktur die veränderten lokalen Materialkennwerte sowie die örtlichen Blechdicken der Teilstrukturen auf die Gesamtstruktur abgebildet werden.

EP 0 978 444 A2

**Beschreibung**

Die vorliegende Erfindung betrifft ein Verfahren zur Ermittlung der Verformungen und Spannungen einer aus Teilstrukturen bestehenden Gesamtstruktur unter Einfluß äußerer Kräfte nach dem Oberbegriff des Patentanspruchs 1.

In vielen Bereichen der industriellen Technik werden Entwicklungen zunächst einer Computersimulation, beispielsweise bezüglich der statischen oder dynamischen Eigenschaften, unterzogen. Ein am Computer entwickeltes Modell kann so bezüglich der zu erwartenden physikalischen Eigenschaften beurteilt werden, ohne daß ein reales Modell gebaut und im Strukturversuch getestet werden müßte.

Im Bereich der Automobilindustrie ist es üblich, die Herstellung einzelner Komponenten, insbesondere bei Blechumformteilen, zunächst zu simulieren. Meist wird unter Verwendung eines FEM-Modelles des Ausgangsmaterials der Umformprozeß simuliert. Dabei können Veränderungen der Blechdicke sowie lokale Verfestigungen bei Annahme eines geeigneten Materialmodells ermittelt werden. In einem von der Umformsimulation unabhängigen Simulationsschritt wird die Gesamtstruktur des Automobils oder eine aus mehreren Einzelteilen bestehende Teilstruktur des Automobils einer Crashsimulation oder Festigkeitsberechnung unterzogen. In diese Simulation fließen die Ergebnisse der Umformsimulation nicht ein, es findet allenfalls eine Übernahme der Geometriedaten statt oder es werden für beide Simulationen die gleichen Geometriedaten der Konstruktion genutzt.

Der vorliegenden Erfindung liegt das Problem zugrunde, ein Verfahren der eingangs genannten Art zu schaffen, bei dem die Material- und Geometriedaten des nächsten Simulationsschritts z.B. des Crash-Simulationsmodells näher an denen der realen Struktur sind.

Dieses Problem wird durch ein Verfahren nach Patentanspruch 1 gelöst. Erfindungsgemäß ist vorgesehen, daß vor der Ermittlung der Verformungen und Spannungen der Gesamtstruktur die veränderten lokalen Verzerrungsgrößen, aus der insbesondere die Blechdicke abgeleitet wird, sowie die lokalen inneren Zustandsvariablen der Teilstrukturen auf die Gesamtstruktur abgebildet werden. Diese Vorgehensweise bietet den Vorteil, daß der mechanische Zustand der umgeformten Einzelteile nach der Fertigung als Ausgangsgröße für die Berechnung des gesamten Modells zur Verfügung steht und ausgewertet werden kann. Neben der Änderung der Geometrie, insbesondere der Blechdicke, durch die Verformung kann ein durch die Fertigungsprozesse verändertes Werkstoffverhalten berücksichtigt werden. Lokale Veränderungen in der Umformzonen von Bauteilen mit großen örtlichen plastischen Verformungen können die Werkstoffeigenschaften, wie zum Beispiel die Fließgrenze und den Bauschinger Effekt, wesentlich beeinflussen. Diese geänderten Werkstoffeigenschaften werden im allgemeinen durch innere Zustandsvariablen (z.B. skalare und/oder tensorielle Verfestigungsgrößen) beschrieben und haben Einfluß auf das Verhalten der Gesamtstruktur bei einem Belastungsversuch. Veränderungen der Festigkeit und der plastischen Verformbarkeit einzelner Bauteile wirken sich unmittelbar auf das Verformungsverhalten der Gesamtstruktur sowie die notwendige Energie zur Erzielung einer unzulässigen Verformung der Gesamtstruktur aus. Bei Berücksichtigung der Veränderung der Werkstoffeigenschaften der Einzelteile in den Fertigungsumformprozessen wird eine höhere Vorhersagegenauigkeit der Simulation erreicht. Besonders vorteilhaft ist es, wenn die lokalen Materialkennwerte der Teilstrukturen die Fließgrenze und/oder der lokale Verzerrungszustand und/oder weitere lokale innere Zustandsvariable zur Beschreibung des Werkstoffverhaltens und/oder die lokale Verzerrungsgeschwindigkeit sind. Insbesondere die Fließgrenze ist eine entscheidende Größe zur Bestimmung von Spannungszuständen, die eine plastische Verformung herbeiführen. Wird im Materialmodell das Verfestigungsverhalten durch eine Spannungs/Dehnungsfunktion beschrieben, so läßt sich nur durch Angabe des plastischen Verzerrungszustands, insbesondere der plastischen Vergleichsdehnung, und der Verzerrungsgeschwindigkeit der Verlauf einer Spannungs/Dehnungsfunktion eines verfestigten Werkstoffes aus der zuvor bekannten Spannungs/Dehnungsfunktion ermitteln.

In einer bevorzugten Ausgestaltung des Verfahrens ist weiterhin vorgesehen, daß die lokale Fließgrenze der Teilstrukturen anhand des lokalen plastischen Verzerrungszustands, insbesondere der plastischen Vergleichsdehnung, sowie der lokalen Verzerrungsgeschwindigkeit ermittelt wird. Der plastische Verzerrungszustand ist für die Umformung von Bedeutung und wird daher in der Umfomsimulation ermittelt. Die Verknüpfung dieser Größe mit einem geeigneten Materialmodell liefert so eine einfach zu handhabende skalare Größe pro Element.

In einer bevorzugten Ausgestaltung des Verfahrens ist weiterhin vorgesehen, daß die Ermittlung der Veränderung der lokalen Materialkennwerte der Teilstrukturen in dem jeweiligen Umformprozeß mit Hilfe eines Finite-Element-Modells der Teilstrukturen erfolgt, wobei das Finite-Element-Modell aus einzelnen Elementen besteht, die durch Elementknoten und Elementflächenmittelpunkte gekennzeichnet sind. Ein gleichartiges Verfahren kommt bei der Ermittlung der Verformung der Gesamtstruktur zum Einsatz. Finite-Element-Verfahren sind gängige Praxis im Bereich der computergestützten Simulation.

Zur Durchführung des Verfahrens kann weiterhin vorgesehen sein, daß zur Abbildung der lokalen Materialkennwerte sowie der lokalen Blechdicken der Teilstrukturen auf die Gesamtstruktur die Elemente des Finite-Element-Modells der Teilstrukturen und des Finite-Element-Modells der Gesamtstruktur einander zugeordnet werden, die den kleinsten Abstand voneinander haben, wobei Materialkennwerte des oder der Elemente der Teilstruktur dem zugeordneten Element der Gesamtstruktur zugewiesen werden. Üblicherweise werden in der Umformsimulation Finite-Element-Modelle mit einer sehr feinen Elementierung benutzt. Für die Crashsimulation ist es demgegenüber wünschenswert, Bereiche, in denen eine starke Verformung der Gesamtstruktur erwartet wird, feiner zu elementieren und Bereiche, die vermutlich kleiner Verformungen unterliegen werden, gröber zu elementieren.

Weiterhin kann vorgesehen sein, daß zur Abbildung der lokalen Materialkennwerte sowie der lokalen Blechdicken in der Teilstrukturen auf die Gesamtstruktur die Kanten der Elemente des Finite-Elementen-Modells der Teilstruktur auf das Finite-Element-Modell der Gesamtstruktur projiziert werden, wobei die Materialkennwerte gewichtet dem Element der Gesamtstruktur zugeordnet werden. Diese Ausgestaltung des Verfahrens erlaubt eine besonders einfache Zuordnung der Geometrie des Umformmodells zur Geometrie des Crashsimulationsmodells.

In einer weiteren Ausgestaltung des Verfahrens kann vorgesehen sein, daß die Elemente des Gesamtmodells entsprechend ihrer plastischen Vergleichsdehnung klassifiziert werden, wobei jeder der so entstandenen Elementklassen eine Anfangs-Fließgrenze zugeordnet wird. Die Berechnung der Fließgrenze anhand eines Materialmodells wird durch die Klassifizierung vereinfacht. Da das Materialmodell in der Regel aus Versuchen ermittelt wird, bei denen als Ergebnis ein Zahlenpaar Spannung/Dehnung anfällt, können diese Werte recht einfach in eine Klasseneinteilung Spannung/Dehnung übernommen werden.

Im folgenden wird ein Ausführungsbeispiel der vorliegenden Erfindung beschrieben.

Für die Umformungsimulation wird das Hill'sche Materialmodell mit ebener plastischer Orthotropie gewählt, welches unterschiedliche R-Werte in den Richtungen 0°, 45° und 90° zur Walzrichtung berücksichtigt. Die isotrope Verfestigung kann in diesem Modell noch zusätzlich von der Dehngeschwindigkeit $\dot{\varepsilon}$ abhängen. Es werden dazu Span-nungs/Dehnungsfunktionen der Art

$$\sigma = f(\varepsilon_{vp}, \dot{\varepsilon}) \qquad\qquad (1)$$

benutzt. Da das Verfestigungverhalten dehnratenabhängig sein kann, ist sowohl bei der Umform- als auch bei der anschließenden Crashsimulation darauf zu achten, daß in der Simulationsrechnung die richtige physikalische Zeit berücksichtigt wird.

Die Materialmodelle nach Gleichung 1 mit einer skalarwertigen inneren Zustandsvariablen erlauben die Bestimmung der Verfestigung aus der plastischen Vergleichsdehnung $\varepsilon_{vp}$. Diese wird mittels

$$\varepsilon_{vp} = \int_0^t \sqrt{\frac{2}{3}\, D_{ij}^P\, D_{ij}^P}\; dt$$

aus dem plastischen Anteil des plastischen Verzerrungsgeschwindigkeitstensors $D_{ij}^P$ berechnet. Die Größe wird für jeden Integrationspunkt über die Schalendicke ausgewertet. Das Verfahren basiert auf der Annahme einer isotropen Verfestigung unter Vernachlässigung der unterschiedlichen Verfestigung über die Schalendicke durch Wahl eines Mittelwerts sowie unter Vernachlässigung des Eigenspannungszustands. Als Modellparameter verbleiben nur die Schalendicke und die mittlere plastische Vergleichsdehnung, die vom FE-Netz der Umformsimulation auf das Modell der Crashsimulation übertragen werden müssen. Die Zuordnung der Modellparameter auf das Crashmodell erfolgt automatisch mit Hilfe eines Computerprogramms. Dieses bearbeitet folgende Teilaufgaben:

   1. Geometrische Zuordnung der Elemente
   2. Berechnung der gewichteten Elementwerte (Blechdickenverteilung)
   3. Klassifizierung der Elemente (plastische Vergleichsdehnung)
   4. Schreiben einer neuen Materialkarte.

Als Eingabedaten sind die Ergebnisse aus der Umformsimulation, die zu bearbeitende Eingabedatei der Crashsimulation sowie eine Werkstoffdatei erforderlich. Aus diesen Daten erstellt das Programm eine geänderte Eingabedatei für die Crashsimulation.

Die Zuordnung der Elemente des Umformnetzes auf die des Crashnetzes erfolgt unter der Annahme, daß das Netz der Umformsimulation feiner ist als das Netz der Crashsimulation. Es wird zunächst von allen Elementmittelpunkten des Umformnetzes eine Projektion auf das Crashnetz durchgeführt. Die Information, welches korrespondierende Element des Crashnetzes dabei ermittelt wurde, wird für jedes Element des Umformnetzes abgespeichert. Anschließend wird das arithmetische Mittel der Elementdicken jener Elemente des Umformnetzes gebildet, welche genau einem Element des Crahsnetzes zugeordnet werden sollen. Diese gewichtete Elementdicke wird dann in der Eingabe-Datei geändert.

**Patentansprüche**

1. Verfahren zur Ermittlung der Verformung und Spannungen einer aus Teilstrukturen bestehenden Gesamtstruktur unter Einfluß äußerer Kräfte, wobei die Teilstrukturen zumindest teilweise aus in einem Umformprozeß plastisch verformtem Material bestehen und in einem ersten Verfahrensschritt die Veränderung von lokalen Materialkennwerten und der lokalen Verformung der Teilstrukturen in dem jeweiligen Umformprozeß ermittelt werden, und wobei in einem weiteren Verfahrensschritt die Verformung der Gesamtstruktur unter Einfluß äußerer Kräfte ermittelt wird, **dadurch gekennzeichnet, daß** vor der Ermittlung der Verformung der Gesamtstruktur die veränderten lokalen Materialkennwerte sowie die örtlichen Verformungen der Teilstrukturen auf die Gesamtstruktur abgebildet werden.

2. Verfahren nach Anspruch 1, dadurch gekennzeichnet, daß die lokalen Materialkennwerte der Teilstrukturen die Fließgrenze und/oder der Verzerrungszustand und/oder weitere innere Zustandsvariable zur Beschreibung des Werkstoffverhaltens und/oder die Verzerrungsgeschwindigkeit sind.

3. Verfahren nach Anspruch 2, dadurch gekennzeichnet, daß die lokale Fließgrenze der Teilstrukturen anhand des lokalen Verzerrungszustands und/oder weiterer innerer Zustandsvariablen sowie der lokalen Verzerrungsgeschwindigkeit ermittelt wird.

4. Verfahren nach einem der Ansprüche 1 bis 3, dadurch gekennzeichnet, daß die Ermittlung der Veränderung der lokalen Materialkennwerte der Teilstrukturen in dem jeweiligen Umformprozeß mit Hilfe eines Finite-Element-Modells der Teilstrukturen erfolgt, wobei das Finite-Element-Modell aus einzelnen Elementen besteht, die durch Elementknoten und Elementflächenmittelpunkte gekennzeichnet sind.

5. Verfahren nach einem der Ansprüche 1 bis 4, dadurch gekennzeichnet, daß die Ermittlung der Verformung der Gesamtstruktur unter Einfluß äußerer Kräfte mit Hilfe eines Finite-Element-Modells der Gesamtstruktur erfolgt, wobei das Finite-Element-Modell aus einzelnen Elementen besteht, die durch Elementknoten und Elementflächenmittelpunkte gekennzeichnet sind.

6. Verfahren nach einem der Ansprüche 1 bis 5, dadurch gekennzeichnet, daß zur Abbildung der lokalen Materialkennwerte sowie der lokalen Verformungen der Teilstrukturen auf die Gesamtstruktur die Elemente des Finite-Element-Modells der Teilstrukturen und des Finite-Element-Modells der Gesamtstruktur einander zugeordnet werden, die den kleinsten Abstand voneinander haben, wobei Materialkennwerte des oder der Elemente der Teilstruktur dem zugeordneten Element der Gesamtstruktur zugewiesen werden.

7. Verfahren nach einem der Ansprüche 1 bis 6, dadurch gekennzeichnet, daß zur Abbildung der lokalen Materialkennwerte sowie der lokalen Verformung der Teilstrukturen auf die Gesamtstruktur die Kanten der Elemente des Finite-Element-Modells der Teilstruktur auf das Finite-Element-Modell der Gesamtstruktur projiziert werden, wobei die Materialkennwerte gewichtet dem Element der Gesamtstruktur zugeordnet werden.

8. Verfahren nach Anspruch 7, dadurch gekennzeichnet, daß die Elemente des Gesamtmodells entsprechend ihres plastischen Verzerrungszustands klassifiziert werden, wobei jeder der so entstandenen Elementklassen eine Spannungs/Dehnungsfunktion zugeordnet wird.